(19) Europäisches Patentamt
European Patent Office
Office européen des brevets

(11) Numéro de publication: **0 197 854**
**A1**

(12) # DEMANDE DE BREVET EUROPEEN

(21) Numéro de dépôt: 86400687.9

(22) Date de dépôt: 28.03.86

(51) Int. Cl.4: **G01S 7/52** , G01S 15/52 , G01S 15/89 , G01P 5/00

---

(30) Priorité: 05.04.85 FR 8505255

(43) Date de publication de la demande: 15.10.86 Bulletin 86/42

(84) Etats contractants désignés: DE GB NL

(71) Demandeur: CGR ULTRASONIC
9, Chaussée de Paris
F-77102 Villenoy-les-Meaux(FR)

(72) Inventeur: Lannuzel, Olivier
THOMSON-CSF SCPI-19, avenue de Messine
F-75008 Paris(FR)

(74) Mandataire: Grynwald, Albert
THOMSON-CSF SCPI 19, avenue de Messine
F-75008 Paris(FR)

---

(54) **Dispositif d'imagerie par ultrasons.**

(57) La présente invention a pour objet un dispositif (1, 4, 5) d'imagerie par ultrasons dans lesquel on cherche à représenter, pour montrer une coupe d'un milieu (2), le paramètre vitesse de déplacement dans le milieu de tous les éléments de la coupe. Le problème résolu réside dans la mise en place d'un filtre (6) pour éliminer les composantes parasites du signal dues à des parties fixes du milieu. Ce filtre comporte des moyens (7, 8) de retard dont le retard est égal à la période de répétition $(1/F_r)$ d'un signal acoustique $(f_o)$ d'excitation (3, 16) du milieu. Il comporte aussi des moyens (9, 10) de comparaison pour retrancher, d'une période à l'autre, les signaux reçus et correspondant exactement à des mêmes points du milieu. Les échos fixes sont éliminés car d'une période à l'autre leur contribution dans le signal est la même : par soustraction cette contribution s'élimine.
Application diagnostic médical du coeur.

EP 0 197 854 A1

# FIG_1

0 197 854

## DISPOSITIF D'IMAGERIE PAR ULTRASONS

La présente invention a pour objet un dispositif d'imagerie par ultrasons dont l'utilisation est notamment envisagée dans le domaine médical.

Il est connu différents types d'appareils à ultrasons, c'est-à-dire émettant dans un corps ou un milieu à examiner une impulsion ultrasonore vibrant à une fréquence acoustique, et mesurant les caractéristiques du signal d'écho rétrodiffusé par le milieu. Actuellement les dispositifs à ultrasons utilisés pour faire de l'imagerie sont des dispositifs qui mettent en exergue l'amplitude des échos. Connaissant la date à laquelle un écho est reçu, par rapport à la date d'émission de l'impulsion qui lui donne naissance, on peut déduire, connaissant également la vitesse de propagation du son dans le milieu, l'endroit d'où cet écho provient. L'amplitude de l'écho, elle, renseigne sur les caractéristiques intrinsèques du tissu rencontré à l'endroit en question. En focalisant les émissions d'impulsions, on dit aussi les tirs, dans une direction donnée, et en mesurant l'amplitude des signaux d'écho pendant des durées données, on peut donner une représentation des tissus rencontrés par l'impulsion. Les tissus rencontrés sont situés sur le trajet de propagation aller et retour de l'impulsion jusqu'à une profondeur, dans le milieu, proportionnelle aux durées pendant lesquelles on mesure ces signaux. En focalisant les émissions dans une autre direction, adjacente à la première, on balaye une partie du milieu. De proche en proche on peut explorer tout un secteur du milieu. Des moyens d'affichage conventionnels permettent de donner une image des amplitudes mesurées à chaque endroit et dans chaque direction.

D'autres appareils à ultrasons sont utilisés : les appareils de mesure de la vitesse du sang. Dans ceux-ci le phénomène intéressant est la vitesse du sang. Elle provoque un glissement Doppler de la fréquence acoustique du signal émis, de telle façon qu'on puisse en déduire la vitesse du sang en un endroit donné. Plus le glissement Doppler est important plus il est révélateur d'un sang circulant vite. Pour calculer cette vitesse, on soustrait du signal rétrodiffusé et reçu les composantes à fréquence acoustique originelles (on démodule). De cette manière on ne fait apparaître que le glissement Doppler seul. En fait l'obtention de ce glissement Doppler seul n'est pas simple. Un problème essentiel est celui de l'élimination dans ce signal, des échos dits fixes parce qu'ils sont liés aux échos rétrodiffusés par les parties fixes du milieu, en particulier les parois des cavités et canaux dans lesquels coule le sang. Même la démodulation n'élimine pas du signal utile ces composantes parasites. En effet ces parois vibrent légèrement sous l'effet des pulsations cardiaques. En conséquence le signal acoustique qu'elles rétrodiffusent est un signal chargé d'une composante Doppler représentative de ces vibrations. Typiquement ces composantes se situent en très basse fréquence autour de quelques Herz.

L'inconvénient de ces échos fixes est que leurs amplitudes sont très supérieures à celles des signaux rétrodiffusés par les particules du sang. La différence d'amplitude vaut couramment 30dB. Pour pouvoir traiter le signal utile de glissement Doppler, il convient d'éliminer ces composantes très basse fréquence. Pour cela on utilise des filtres, dits réjecteurs d'échos, qui sont souvent du type à capacités commutées. Ces filtres doivent avoir des flancs très raides : le signal utile de glissement Doppler, pour être exploitable, doit avoir un rapport signal à bruit supérieur à 20 dB. Il en résulte que le taux de réjection de ces filtres doit être au moins égal à 50 dB (20 + 30 = 50). Or, les filtres réjecteurs d'échos présentent un inconvénient : compte tenu de leur temps de réponse ils ne peuvent fonctionnellement filtrer les échos fixes qu'à une date donnée. Ils sont prévus pour jouer leur role pendant une durée faible, pas pendant la période entière qui sépare deux impulsions d'excitation successives. Ils sont calculés pour éliminer du signal utile des composantes parasites quand ces composantes parasites surviennent à une date donnée.

Autrement dit, compte tenu d'une durée donnée entre l'émission et la réception, (cette durée liée à la propagation est équivalente à une profondeur précise de pénétration dans le milieu), les filtres réjecteurs d'échos n'éliminent dans le signal reçu des composantes parasites que si ces composantes parasites proviennent de la profondeur de pénétration en question. Pour une profondeur plus ou moins éloignée le filtre est inopérant : le signal reçu correspondant est bruité par les échos fixes. Il en résulte que si on désire construire une image dont la luminosité des points d'image est liée à la vitesse de circulation du sang en des endroits correspondant du milieu, les filtres réjecteurs d'écho ne peuvent être utilisés que si leur nombre est égal au nombre des points d'image que l'on veut représenter. Etant donné les coûts ceci est actuellement hors de question.

L'invention propose alors un dispositif d'imagerie dans lequel on va effectivement créer une image dans laquelle le paramètre représenté en chaque point d'image est la vitesse du sang en un point correspondant dans le milieu. Dans ce dispositif on a en outre imaginé un filtre des échos fixes à la fois original et peu coûteux. Par ailleurs le calcul de la vitesse de déplacement d'une cellule du sang en un point d'un milieu étant plus difficile à exécuter que la simple mesure d'amplitude d'un écho provenant de la cellule en question, dans l'invention, on met en oeuvre un procédé de calcul rapide de ces vitesses de telle manière qu'il soit quasiment effectué en temps réel. Comme on le vera plus loin le dispositif décrit est capable d'élaborer une image en un temps inférieur ou égal à 20 milli-secondes. Ce temps est à rapprocher du rythme cardiaque d'un patient dont la période est rarement inférieure à 200 ms. En conséquence avec le dispositif de l'invention on est capable pour chaque pulsation cardiaque, même dans les cas les plus critiques, de donner 10 images, voire plus, de l'évolution de la vitesse du sang en un endroit particulièrement sensible : dans le coeur.

L'invention à pour objet un dispositif d'imagerie par ultrasons caractérisé en ce qu'il comporte :

-des moyens pour émettre vers un corps et recevoir en retour, dans une direction donnée, des signaux répétitifs de période donnée, impulsionnels, et acoustiques,

-des moyens d'analyse spectrale pour calculer, à partir des signaux reçus des vitesses de déplacement des parties du corps,

-des moyens d'imagerie pour montrer une coupe du corps où les différentes parties selon la direction donnée sont représentées par leur vitesse de déplacement,

-des moyens pour faire varier l'orientation de la direction donnée et pour représenter ainsi d'autres parties du corps selon ces autres directions ;

-et en outre des moyens d'élimination dans le signal, des composantes dues à des parties fixes du corps,

-ces moyens d'élimination comportant des moyens de retard dont le retard est égal à la période de répétition du signal acoustique, et des moyens de comparaison pour retrancher du signal reçu à une date donnée, le signal reçu exactement une période plus tôt, et qui est présenté à ces moyens de comparaison après avoir traversé les moyens de retard.

L'invention sera mieux comprise à la lecture de la description qui suit et à l'examen des figures qui l'accompagnent. Celles-ci ne sont données qu'à titre indicatif et nullement limitatif de l'invention.

Elles montrent :
-figure 1, un dispositif conforme à l'invention ;
-figure 2, des moyens intermédiaire de production de signaux utilisés dans le dispositif précédent.
-figure 3, une variante préférée d'un perfectionnement de l'invention.

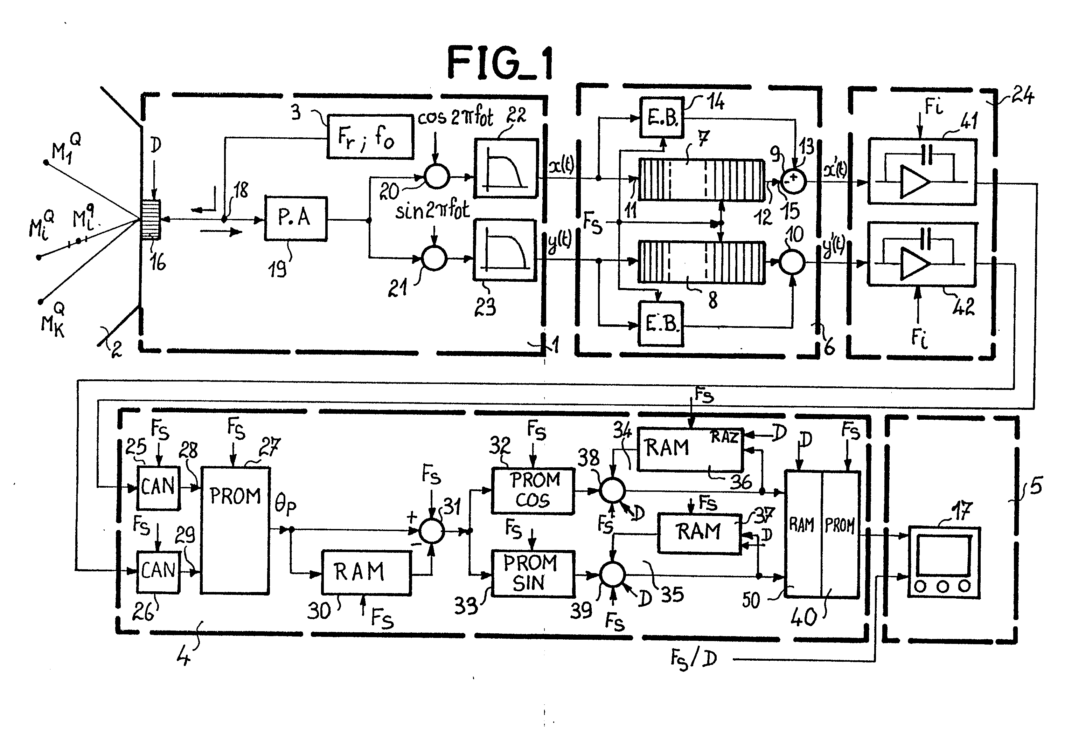

La figure 1 montre un dispositif conforme à l'invention. Il comporte des moyens 1 pour émettre vers un corps 2, et recevoir en retour, des signaux répétitifs impulsionnels et acoustiques. Sur le plan pratique les impulsions sont produites par un générateur 3 avec une fréquence de répétition $F_r$. La fréquence acoustique du signal contenu dans les impulsions est $f_o$ . Le dispositif comporte encore des moyens 4 d'analyse spectrale pour calculer, à partir des signaux reçus, des vitesses de déplacement des parties du corps. Il comporte enfin des moyens d'imagerie 5 pour montrer une coupe du corps où les différentes parties sont représentées par leur vitesse de déplacement. Ce dispositif comporte en outre des moyens 6 pour éliminer, dans le signal reçu, des composantes parasites dues à des parties fixes du corps 2. Les moyens d'élimination 6 comportent des moyens de retard 7 - 8 et des moyens de comparaison, respectivement 9 -10, pour retrancher du signal reçu à une date donnée (x(t), y(t)) le signal reçu exactement une période plus tôt et qui est présenté à ces moyens de comparaison après avoir traversé les moyens de retard.

L'idée de l'invention est donc de soustraire, à un signal reçu à une date donnée qui correspond en fait à la contribution de rétrodiffusion d'une partie donnée du corps 2, un même signal acquis à une date préalable, dans les mêmes conditions, et correspondant à la même partie du corps 2. On pourrait s'attendre à ce que cette soustraction annule complètement le signal résultant. Il n'en est rien et seules les composantes à basse fréquence, qui n'ont pas eu le temps de suffisamment évoluer entre les deux dates se neutralisent mutuellement. Pour les autres composantes du signal, celles représentatives des glissements Doppler significatifs et qui se situent à des fréquences plus élevées, elles ne se retrouvent pas en phase à chacune de ces deux dates. Si tel était le cas, elles se simplifieraient effectivement. Mais cela n'est pas le cas et le soustracteur, 9 ou 10, les recompose. On pourrait montrer mathématiquement, et l'expérience le vérifie, que les signaux ainsi recomposés sont comparables, tant par leurs spectres -(dans la bande utile) que par leurs amplitudes, à chacun des signaux qui interviennent dans leur composition.

D'une manière préférée la ligne à retard 7 dans l'invention est constituée par un dispositif à transfert de charges. Il en est de même de la ligne à retard 8. Les dispositifs à transfert de charges - (CCD) sont typiquement des registres à décalage analogiques. Ils comportent une entrée, une sortie et un certain nombre de cellules. Dans un exemple, le dispositif à transfert de charges utilisé est un composant CCD 321 de la Société FAIRCHILD USA qui comporte 455 cellules adjacentes. Un signal $x(t)$ introduit à l'entrée 11 d'un tel dispositif à transfert de charges est échantillonné, et sa valeur est stockée dans une première cellule sous l'impulsion d'un signal de synchronisation $F_s$. A une impulsion suivante, le signal contenu dans la première cellule est transmis à la cellule suivante ; la première cellule reçoit alors un signal échantillonné provenant de l'entrée. De proche en proche au rythme des impulsions de synchronisation cette valeur échantillonnée évolue géographiquement dans le dispositif à transfert de charges. Puis elle arrive à la dernière cellule. A l'impulsion suivante, elle est délivrée par la sortie 12 de ce dispositif 7 au comparateur 9.

Comme un dispositif à transfert de charges est un registre à décalage analogique véhiculant des valeurs échantillonnées il convient d'attaquer le comparateur 9 sur son autre entrée avec des valeurs également échantillonnées. C'est la raison pour laquelle le signal $x(t)$ élaboré à une date donnée est présenté sur l'autre entrée 13 du comparateur 9 après être passé dans un échantillonneur bloqueur 14. La première entrée 15 du comparateur 9 reçoit les échantillons délivrés par la sortie 12. Dans les moyens d'élimination 6, l'échantillonneur-bloqueur 14 associé à la ligne à retard 7 peut être placé en amont du circuit. Il peut être placé directement en cascade avec les moyens de réception 1. Le fonctionnement des moyens de retard 7 n'en est pas altéré. Mais la représentation donnée dans la figure 1 est préférée du fait qu'elle simplifie la synchronisation de l'échantillonneur-bloqueur 14 avec la ligne à retard 7 quand ils combinent dans le comparateur 9 les signaux qu'ils délivrent. Si l'échantillonneur-bloqueur 14 est placé en amont de la ligne à retard 7, il est nécessaire de prévoir des déphasages - (technologiques) entre les commandes de synchronisation de ces deux éléments.

Dans l'invention le choix d'un dispositif à transfert de charges est retenu car il permet de régler la durée du retard. En effet, et c'est une contrainte supplémentaire pour les fabricants, les dispositifs d'imagerie doivent être réglables ; on doit pouvoir faire des acquisitions d'image à des rythmes différents. Avec une ligne à retard de retard constant la période de répétition des impulsions serait figée : elle ne serait pas réglable. Or, couramment cette fréquence de répétition doit pouvoir être réglée dans une gamme importante, typiquement de 5 à 25 KHz. Avec un dispositif à transfert de charges il suffit d'augmenter la fréquence de synchronisation $F_s$ pour faire varier le retard. Pour le circuit cité cette fréquence de synchronisation peut être comprise entre 10 KHz et 20 MHz (20 MHz est bien plus grand que 455 x 25 KHz).

Le comparateur 9 est en fait un soustracteur qui soustrait du signal présenté à une date donnée un signal qui est apparu exactement une période de répétition plus tôt et qui lui est présenté maintenant sur sa première entrée après avoir traversé la ligne à retard. L'échantillonneur 14 et le comparateur 13 sont pilotés bien entendu par le même signal de synchronisation $F_s$. La fréquence de ce signal de synchronisation est un multiple entier de la fréquence de répétition. Dans l'exemple elle vaut 455 fois cette fréquence. De cette manière on compare des échantillons qui correspondent à des localisations identiques dans le milieu 2.

Les moyens d'émission-réception 1 et d'analyse spectrale 4 sont les mêmes que ceux décrit dans une précédente demande de brevet français de la Demanderesse n° 83.13658 déposée le 24 Août 1983. Dans cette demande de brevet il est mis en évidence que la vitesse moyenne d'un élément de volume d'un fluide (le sang) qui correspond à la fréquence moyenne du signal de glissement Doppler relatif à cet élément de volume, est proportionnelle à l'argument de la fonction d'autocorrélation du signal temporel reçu. Moyennant certaines hypothèses sur la stationnarité du phénomène d'écoulement étudié, le circuit d'analyse spectrale 4 peut être notablement simplifié. Compte tenu des impératifs de calcul en temps réel pour des systèmes de visualisation (de l'ordre de 25 images par seconde) ce procédé simplifié est repris ici. Néanmoins en choisissant des composants performants on peut mettre en oeuvre d'autres procédés d'analyse spectrale.

Les moyens d'émissions des impulsions acoustiques comportent le générateur 3 d'impulsions acoustiques qui débite dans une sonde 16 piézoélectrique. La sonde 16 émet dans une direction $M_i$, où $i$ peut varier de 1 à K (dans un exemple K = 32), que l'on peut faire varier dans le temps. Il est connu de telles sondes 16 munies d'une pluralité d'éléments rayonnants, en cascade avec des circuits de commutation retardée et dont on peut faire varier les retards en fonction d'un ordre D de manière à balayer un secteur compris entre les directions $M_1$ et $M_K$ du milieu 2. De ce point de vue les sondes 16 sont tout à fait comparables à celles qui sont utilisées dans l'imagerie classique où on représente les amplitudes des échos rétrodiffusés. Les ordres D qui commandent les directions de balayage sont compatibles avec ceux qui pilotent le balayage de l'écran 17 des moyens de visualisation 5.

A la fin de chaque impulsion d'excitation acoustique, et entre les impulsions, la sonde 16 est disponible pour capter les signaux rétrodiffusés par le milieu. Les signaux qu'elle capte au plus tôt après la fin de l'impulsion acoustique sont les signaux rétrodiffusés par les parties du milieu les plus proches de la sonde. En agissant, pendant la réception, sur les circuits de commutation retardée au moyen des ordres D, on peut s'assurer que le signal délivré en réception par la sonde est celui qui provient d'une direction donnée. D'une impulsion à une autre, ou, ce qui revient au même, d'un tir à un autre, on peut décider de modifier la direction et donc de balayer le secteur à étudier. Le signal détecté par la sonde 16 transite par un duplexeur 18 et aboutit à un préamplificateur 19. Puis il est démodulé en quadrature dans deux démodulateurs 20 et 21 qui sont dits en quadrature car ils recoivent sur leur entrée de démodulation des signaux, cos $2\pi f_o.t$ et sin $2\pi f_o.t$, qui sont en quadrature de phase. Cette démodulation a pour objet essentiel d'effectuer une transposition de fréquence du signal reçu de manière à ne laisser apparaître que les composantes Doppler seules. Les signaux démodulés sont alors filtrés dans des filtres passe-bas respectivement 22 et 23 d'où ils sortent sous la forme de deux signaux en quadrature : x(t) et y(t). Ces deux composantes appartiennent au signal reçu présenté sous une forme complexe z(t) ce qui peut s'écrire :

$$z(t) = x(t) + j \cdot y(t) \text{ où } j^2 = -1.$$

Ce signal complexe est celui sur lequel va porter l'élimination des échos fixes décrite plus haut. Puis après une transformation éventuelle dans un intégrateur 24 dont on verra l'utilité plus loin, le signal z(t) est introduit dans les moyens d'analyse spectrale 4. En se référant à la demande de brevet précitée, on peut dire que la vitesse moyenne d'un élément de volume du milieu est proportionnelle à l'argument de la fonction d'autocorrélation du signal z(t). Après calcul cet argument peut s'exprimer de la manière suivante :

$$\text{Arg}\ (r\ (1/Fr)) = \text{Arctg} \left( \frac{\sum_P \sin(\Theta_p - \Theta_{p-1})}{\sum_P \cos(\Theta_p - \Theta_{p-1})} \right)$$

Dans cette formule $r(1/F_r)$ fonction d'autocorrélation de z(t) calculée pour une durée de corrélation égale à $1/F_r$ (égale à la période de répétition des impulsions acoustiques). Dans le deuxième membre de la formule, $\Theta_p$ est l'argument d'un l'échantillon complexe z(t) apparu après un tir de rang p ; $\Theta_{p-1}$ est un même argument du même-échantillon (c'est-à-dire relatif à une même localisation dans le milieu) et correspondant à un tir précédent de rang p-1. Dans le deuxième membre de cette formule P est un nombre d'échantillons que l'on estime suffisant pour une bonne connaissance de la fonction d'autocorrélation. Dans un exemple P vaut 16.

Les moyens d'analyse spectrale 4 excécutent la formule indiquée juste ci-dessus. Des échantillons x'(t) et y'(t) débarassés des échos fixes étant introduits, des convertisseurs analogiques-numériques 25 et 26 effectuent une quantification de ces échantillons. Les échantillons quantifiés sont alors introduits dans une mémoire morte préprogrammée 27. La mémoire 27 est préprogrammée pour répondre à la fonction d'arctangente y/x. La mémoire morte 27 comporte donc deux entrées une première entrée 28 pour recevoir la partie réelle x'(t) de l'échantillon quantifié complexe z(t) et une deuxième entrée 29 pour recevoir la partie imaginaire y'(t). Du fait de sa programmation, la mémoire morte délivre en sortie l'argument $\Theta_p$ de l'échantillon complexe admis en entrée.

Les convertisseurs 25 et 26 et la mémoire 27 sont commandés par un signal à la fréquence de synchronisation $F_s$. Ceci s'explique de la manière suivante. Après au moins deux tirs successifs, on est sûr que les lignes à retard 7 et 8 ont bien été chargées entièrement par un tir précédent et que les comparateurs 9 et 10 jouent effectivement leur rôle en comparant point à point les résultats du deuxième tir avec les résultats du premier tir. Du fait du nombre de cases des lignes à retard 7 et 8, à chaque tir, un grand nombre (455) d'échantillons x'(t) et y'(t) est présenté aux convertisseurs 25 et 26. Au cours d'un tir la mémoire morte 27 délivre donc un même grand nombre (455) d'argument $\Theta_p$ d'échantillons complexes. Les arguments $\Theta_p$ d'un tir correspondent, dans le temps, à des régions de plus en plus profondément enfoncées dans le milieu 2.

Le calcul de $\Theta_p - \Theta_{p-1}$ est effectué au moyen d'un circuit comprenant un registre à décalage 30 recevant en entrée les arguments $\Theta_p$ et les délivrant en sortie, après un certain retard, à l'entrée moins d'un soustracteur 31. Le soustracteur 31 reçoit les arguments $\Theta_p$ par ailleurs sur son entrée plus. Le registre à décalage 30 contient en mémoire un nombre d'arguments $\Theta_p$ correspondant au nombre (455) des arguments élaborés pendant la durée d'un tir. Une fois qu'un tir est fini, quand le tir suivant commence, le premier $\Theta_p$ élaboré par la mémoire 27 est introduit dans le registre 30 et chasse de proche en proche d'un cran tous les arguments stockés. De cette manière le premier argument correspondant au tir précédent, $\Theta_{p-1}$, est chassé hors du registre 30 et vient se soustraire dans le soustracteur 31 à la nouvelle valeur. Ceci est possible parce que le registre à décalage 30 et le soustracteur 31 sont pilotés par le même signal de synchronisation $F_s$ que celui qui sert à piloter les lignes à retard 7 et 8. Le registre 30 peut être remplacé par une mémoire vive (RAM) qui reçoit en écriture les arguments $\Theta_p$ à une adresse qui s'incrémente à chaque impulsion $F_s$. Cette mémoire délivre les arguments $\Theta_{p-1}$ par la lecture de cellules mémoire dont les adresses sont décalées des adresses d'écriture d'un nombre égal au nombre des arguments à stocker.

Pour bien saisir le déroulement des différentes séquences relatives à la constitution d'une image, il faut se rappeler que la sonde est prévue pour balayer dans K directions, que les moyens 7 et 8 de retard permettent de discriminer dans chaque direction Q points de l'espace examiné (dans l'exemple Q = 455), et, qu'en application de la méthode d'autocorrélation décrite dans la demande de brevet citée, il est nécessaire d'acquérir pour chaque éléments de volume P échantillons. Ceci signifie qu'on répète P fois les tirs dans chacune des directions $M_i$ (i compris entre 1 et K). Les différences d'argument $\Theta_p - \Theta_{p-1}$ sont introduites dans deux mémoires mortes préprogrammées 32 et 33. Les fonctions préprogrammées dans ces mémoires correspondent respectivement aux fonctions cosinus et sinus. Il en résulte que dès qu'une différence d'angle est introduite en entrée de ces mémoires elles délivrent, sous la commande d'une impulsion de synchronisation $F_s$, des valeurs correspondant respectivement aux cosinus et aux sinus de cette différence. Ces valeurs sont ensuite introduites dans des sommateurs-accumulateurs 34 ou 35. Ces sommateurs-accumulateurs comprennent chacun un registre à décalage 36 ou 37 rebouclé sur un additionneur 38 ou 39. Les entrées des registres à décalage 36 ou 37 sont connectées aux sorties des additionneurs ; les sorties de ces registres sont connectées à l'une des entrées des additionneurs. Sur leur autre entrée les additionneurs reçoivent les signaux délivrés par les mémoires mortes 32 ou 33 respectivement. Les sommateurs-accumulateurs doivent effectuer les accumulations figurant respectivement au dénominateur et au numérateur de la formule précédente. Ils doivent donc, sur P tirs, additionner tous les cosinus et tous les sinus des variations d'arguments entre chaque tir. Ceci signifie d'une part que les additionneurs 38 et 39, et d'autre part les registres à décalage 36 et 37 doivent être pilotés par un même signal de synchronisation $F_s$. Dans ces conditions les registres à décalage 36 et 37 doivent comporter eux aussi Q cases pour accumuler correctement les valeurs, correspondant à Q mêmes points $M_i^q$ du milieu, au cours de P tirs successifs dans une direction $M_i$.

Les registres à décalage 36 et 37 peuvent être avantageusement remplacés par des mémoires vives comme le registre 30. En effet, les valeurs qui doivent être enregistrées dans ces registres à chaque fois doivent être quantifiées sur un certain nombre de bits, par exemple 8, 10 ou 12. Par ailleurs le nombre élevé Q (455) des valeurs à stocker peut être un obstacle à l'utilisation de tels registres. En prenant des mémoires vives, on peut en choisir dans lesquelles chaque cellule mémoire comporte un nombre de bits suffisant. L'adressage s'effectue en incrémentant les adresses au rythme des impulsions de commande $F_s$. Au bout de Q impulsions de synchronisation l'adressage se reboucle de manière à faire défiler cycliquement les Q cellules utiles.

Les additionneurs 38 et 39 ainsi que les mémoires mortes 36 et 37 comportent en outre des entrées de remise à zéro pilotées par le signal D. Le signal D est le signal de commande de balayage de la sonde 16. L'acquisition des vitesses dans une direction $M_i$ donnée est effectuée entre deux impulsions de commande D. Le signal D commande également le fonctionnement d'une mémoire morte préprogrammée 40 -50. Ses entrées reçoivent les sorties des circuits 34 et 35. Sa fonction est identique à celle de la mémoire 27. Les valeurs quantifiés délivrées par la mémoire 40 sont alors représentatives des vitesses des points considérés du milieu 2. L'ordre D valide le fonctionnement de la mémoire 40, celle-ci travaillant ensuite, pendant un seul tir, sous le contrôle des impulsions de commande de synchronisation $F_s$.

Elle ne travaille que pendant un seul tir puisqu'on décide ici par commodité de la piloter par un signal $F_s$. Cependant son rythme de travail n'a rien à voir avec ce signal : tout au plus elle doit avoir terminé sa fonction avant la présentation des prochaines valeurs. Celles-ci sont délivrées par 38 et 39 au bout d'un temps $P/F_r$ plus tard. La mémoire 40, ne travaille sur les Q résultats qu'une fois. Ces Q résultats sont rapidement transmis à une mémoire vive 50 jouant un rôle de mémoire tampon après la séquence des P tirs nécessaires à l'acquisition. Puis, avec un léger retard pour que l'écriture ait effectivement pu se faire en fin des P tirs, les mémoires 36 et 37 et les additionneurs 38 et 39 sont remis à zéro. La mémoire morte 40 travaille alors au rythme de $F_s$ sur les résultats provisoirement stockés dans la mémoire 50.

Les moyens de visualisation 5 peuvent comporter un moniteur de télévision 17 éventuellement relié à une mémoire d'image qui reçoit les valeurs quantifiées des vitesses de la mémoire 40. Le moniteur 17 reçoit bien entendu les ordres de synchronisation $F_s$ et de balayage D pour discriminer chaque point dans chaque direction de tir.

Des moyens 24 d'intégration sont prévus pour adapter la résolution du moniteur 17 au nombre de points d'image à visualiser. Ils sont placés entre les moyens 6 d'élimination des échos fixes et les moyens 4 d'analyse spectrale. En effet les moniteurs classiques ne sont pas prévus pour visualiser un grand nombre (455) de points dans une même direction. Aussi, on prévoit, ce qui par ailleurs est tout à fait favorable du point de vue du rapport signal à bruit, d'intégrer dans des intégrateurs respectivement 41 et 42, un certain nombre $\underline{n}$ d'échantillons successifs. Ceci divise par le même nombre $\underline{n}$ les points à visualiser. Les intégrateurs 41 et 42 sont d'un type classique. Ils sont commandés par des ordres d'intégration $F_i$. Ceux-ci sont délivrés à un rythme réduit par division de celui des ordres $F_s$.

Il est bien connu que dans les mesures acoustiques la fréquence de répétition $F_r$ doit être un sous multiple de la fréquence $f_0$. La raison en est simple : d'un tir à l'autre, pour le signal relatif à un même point du milieu (c'est-à-dire à une date très précisément égale après la fin de chaque impulsion d'excitation), il faut que les différents échantillons ne soient pas affectés par un déphasage relatif. Il faut qu'ils viennent bien se combiner ensemble par accumulation. Si tel n'était pas le cas, si $f_0$ n'était pas un multiple exact de $F_r$, la mesure correspondrait en fait à mesurer des déphasages relatifs dus à ce défaut de proportionnalité. Sur le plan pratique les divisions qui permettent d'obtenir $F_r$ à partir d'un signal $f_0$ sont obtenues par des diviseurs par deux. Les considérations prévalant sur la proportionnalité de $f_0$ à $F_r$, les considérations de phase, prévalent aussi pour l'élaboration des ordres de synchronisation $F_s$. Or il y a peu de chance pour que le nombre des échantillons discriminés dans un registre à décalage analogique de type CCD soit un multiple de 2 : en particulier dans l'exemple, 455 n'est pas un multiple de 2.

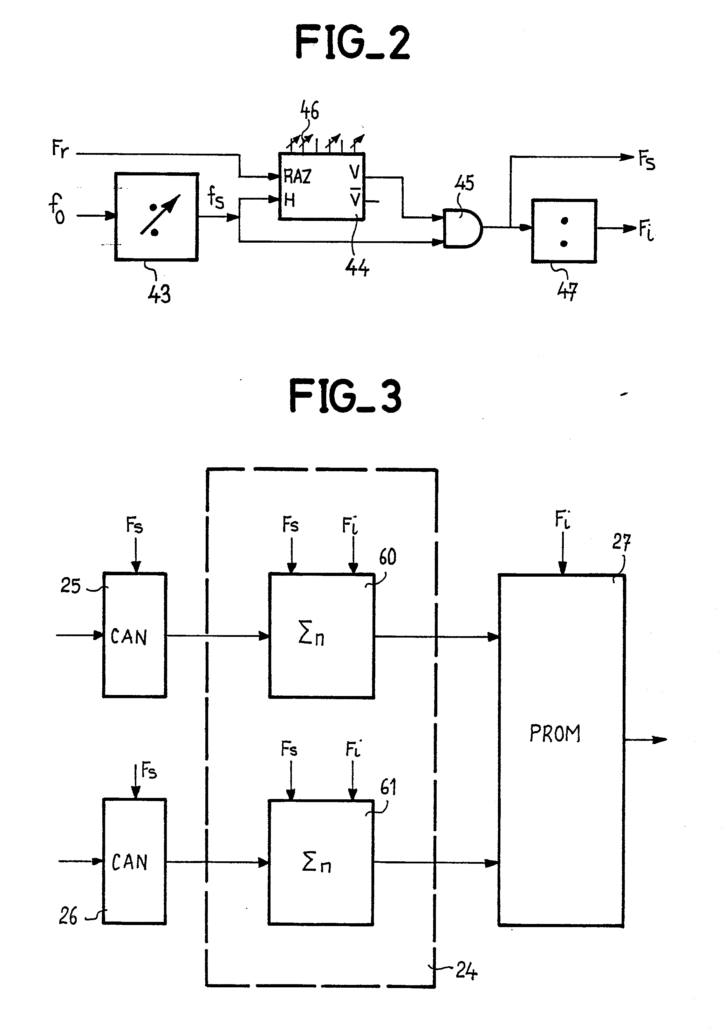

Aussi sauf à construire un multiplicateur spécifique (qui multiplie par 455) pour obtenir le signal $F_s$ à partir du signal $F_r$ on peut procéder en utilisant un circuit représenté sur la figure 2. A partir d'un signal délivré à la fréquence $f_0$ et que l'on divise dans un diviseur variable 43, on obtient un signal à une fréquence $f_s$. La fréquence $f_s$ est calculée pour être inférieure à $f_0$ et pour être supérieure à Q. $F_r$. Ceci signifie que si l'on pilotait les registres 7 et 8 par un signal à la fréquence $f_s$, il pourrait acquérir au moins Q valeurs d'échantillon pendant chaque période de répétition (1/Fr) du signal d'excitation. Au moyen d'un compteur décompteur 44 recevant le signal $f_s$ sur son entrée d'horloge H et le signal $F_r$ sur son entrée de remise à zéro RAZ, on peut délivrer un ordre de validation V, ou d'invalidation $\overline{V}$, qui permet de découper chaque période de répétition en deux époques. Dans une première époque, le signal $f_s$ serait invalidé, et dans une deuxième époque il serait validé. Pour cette raison la sortie du compteur 44 et le signal $f_s$ sont introduits aux deux entrées d'une porte ET 45. Elle ne laisse passer le signal $f_s$ que quand il est validé. Le signal $f_s$ validé est le signal $F_s$ dans toute la description précédente.

Au moyen des entrées de préréglage 46 du compteur 44 on peut afficher un nombre de telle manière qu'après remise à zéro, au début de chaque période de répétition (1/$F_r$), l'horloge du compteur doit compter ce nombre avant que sa sortie ne valide la porte 45. Dans l'exemple, les rapports de $F_r$ à $f_0$ et de $f_s$ à $f_0$ sont tels que le rapport de $f_s$ à $F_r$ vaut 512($2^9$). Dans l'exemple on compte donc 512 -455 = 57 impulsions du signal $f_s$ avant de valider la porte 45. L'invalidation du début de la réception des signaux, au cours de chaque tir, correspond à éliminer du signal reçu les composantes temporelles correspondant aux zones les plus proches de la sonde. Dans le domaine médical, ces zones concernent la peau du patient examiné : ce n'est pas gênant. Et il reste bien Q impulsions du signal $f_s$ pour constituer le signal $F_s$. Mais au moyen des entrées 46 on peut par ailleurs décaler, dans la période de répétition, le début de la deuxième époque comme on le désire.

Le signal $F_i$ qui pilote les intégrateurs 41 et 42 est obtenu par division, dans un diviseur 47, du signal $F_s$. Cette division par un nombre quelconque $\underline{n}$ est équivalente à prendre $\underline{n}$ échantillons successifs (dans le temps) pour représenter un point du milieu. Quand les moyens intégrateur 24 sont utilisés, dans les moyens d'analyse spectrale 4 les impulsions de commande de synchronisation $F_s$ doivent être remplacées par des impulsions de commande de synchronisation $F_i$. En effet dans ce cas le calcul de la vitesse porte sur un nombre de point du milieu divisé par $\underline{n}$.

La figure 3 représente une variante préférée de réalisation des moyens intégrateurs 24. En effet, au lieu de les réaliser sous forme analogique comme l'indique la figure 1, on les réalise sous forme numérique. Dans ce cas ils prennent place après les convertisseurs 25 et 26, et avant la mémoire morte 27. Ils comprennent deux sommateurs-accumulateurs 60 et 61 comparables aux sommateurs-accumulateurs 34 et 35 précédemment décrits. Ils accumulent des échantillons quantifiés au rythme de $F_s$ (dans ce cas comme les convertisseurs 25 et 26) et délivrent leurs résultats au rythme de Fi. Ils se remettent également à zéro au rythme de Fi. Le rapport $F_s/F_i = n$ comptabilise le nombre d'échantillons intégrés.

Après avoir effectué P tirs dans une direction donnée, et donc après avoir acquis par un ordre D relatif à cette direction les échantillons de vitesse de Q points alignés depuis la sonde dans la direction $M_i$, par un autre ordre D' on modifie les conditions de focalisation de la sonde et on réitère P tirs successifs pour échantillonner à nouveau Q vitesses dans une direction $M_{i+1}$. De manière à satisfaire à des conditions classiques de visualisation, on s'arrange pour que $K.P/F_r$ soit inférieur ou de l'ordre de 20 ms. Pendant cette durée on a donc acquis les vitesses de K. Q points du milieu. Dans un exemple on détermine K = 32 directions, et, pour chaque direction on acquiert 16 tirs successifs. De cette manière on fait porter en chaque point le calcul de l'argument de la fonction d'autocorrélation sur 16 échantillons : plus le nombre d'échantillons est important plus la méthode est précise (à condition que le phénomène soit stationnaire). Avec une fréquence de répétition de l'ordre de 20 KHz correspondant à une période de 50 microsecondes, on satisfait alors aux conditions précédentes : $K.P/F_r = 32 \times 16/20\,000$ est de l'ordre de 20 ms. Ces conditions étaient imposées à la fois par des impératifs des dispositifs de visualisation et par des conditions de stationnarité du phénomène étudié. Approximativement 20 ms correspondent à un cinquantième d'une pulsation cardiaque : pendant cette durée on peut considérer que la vitesse du sang en tous points dans le coeur est stationnaire.

## Revendications

1. Dispositif d'imagerie par ultrasons comportant:

-des moyens (1) pour émettre vers un corps (2) et recevoir en retour, dans une direction donnée, des signaux répétitifs de période de répétition donnée - ($F_r$), impulsionnels, et acoustiques ($f_o$),

-des moyens d'analyse spectrale pour calculer à partir des signaux reçus (x(t), y(t)) des vitesses de déplacement des parties du corps,

-des moyens (5) d'imagerie pour montrer une coupe du corps où les différentes parties selon la direction donnée sont représentées par leur vitesse de déplacement,

-des moyens (D, 16) pour faire varier l'orientation de la direction donnée et pour représenter ainsi d'autres parties du corps selon ces autres directions ;

-et en outre des moyens (6) d'élimination, dans le signal, des composantes dues à des parties fixes du corps,

-ces moyens d'élimination comportant des moyens (7 -8) de retard, dont le retard est égal à la période de répétition ($1/F_r$) du signal acoustique, et des moyens (9, 10) de comparaison pour retrancher du signal reçu (13) à une date donnée le signal reçu - (11) exactement une période plus tôt et qui est présenté (12) à ces moyens de comparaison après avoir traversé les moyens de retard

-les moyens pour émettre et recevoir comportant, en réception, deux démodulateurs (20, 21) en quadrature, accordés à la frequence ($f_o$) acoustique émise, et reliés respectivement en cascade chacun à un filtre passe-bas (22, 23), pour délivrer des composantes dites complexes (x(t), y(t)) du signal reçu,

-les moyens de retard comportant deux lignes à retard (7, 8) raccordées, chacune en cascade avec un filtre passe-bas pour recevoir chacune une des composantes complexes,

-les moyens de comparaison comportant deux soustracteurs raccordés, chacun, d'une part à la sortie (12) et d'autre part à l'entrée (13) de chacune des deux lignes à retard, caractérise en ce que les lignes à retard comportent chacune un registre è décalage analogique du type dispositif à transfert de charges, en ce que l'entrée de chaque ligne est raccordée à son soustracteur par l'intermédiaire d'un échantillonneur bloqueur (14), le registre à décalage analogique et cet échantillonneur bloqueur étant pilotés par un signal à une fréquence de synchronisation ($F_s$) réglable et en ce que les moyens d'analyse spectrale comportent des convertisseurs analogiques numériques pour permettre une analyse numérisée des signaux reçus aprés leur sortie des soustracteurs.

2. Dispositif d'imagerie par ultrasons comportant :

-des moyens (1) pour émettre vers un corps (2) et recevoir en retour, dans une direction donnée, des signaux répétitifs de période de répétition donnée - ($F_r$), impulsionnels, et acoustiques ($f_o$),

-des moyens d'analyse spectrale pour calculer à partir des signaux reçus ($x(t)$, $y(t)$) des vitesses de déplacement des parties du corps,

-des moyens (5) d'imagerie pour montrer une coupe du corps où les différentes parties selon la direction donnée sont représentées par leur vitesse de déplacement,

-des moyens (D, 16) pour faire varier l'orientation de la direction donnée et pour représenter ainsi d'autres parties du corps selon ces autres directions;

-et en outre des moyens (6) d'élimination, dans le signal, des composantes dues à des parties fixes du corps,

-ces moyens d'élimination comportant des moyens (7 -8) de retard, dont le retard est égal à la période de répétition ($1/F_r$) du signal acoustique, et des moyens (9, 10) de comparaison pour retrancher du signal reçu (13) à une date donnée le signal reçu - (11) exactement une période plus tôt et qui est présenté (12) à ces moyens de comparaison après avoir traversé les moyens de retard

-les moyens pour émettre et recevoir comportant, en réception, deux démodulateurs (20, 21) en quadrature, accordés à la fréquence ($f_o$) acoustique émise, et reliés respectivement en cascade chacun à un filtre passe-bas (22, 23), pour délivrer des composantes dites complexes ($x(t)$, $y(t)$) du signal reçu,

-les moyens de retard comportant deux lignes à retard (7, 8) raccordées chacune en cascade avec un filtre passe-bas pour recevoir chacune une des composantes complexes,

-les moyens de comparaison comportant deux soustracteurs raccordés, chacun, d'une part à la sortie (12) et d'autre part à l'entrée (13) de chacune des deux lignes à retard caractérisé en ce que les lignes à retard comportent chacune un registre à décalage analogique du type dispositif à transfert de charges, en ce qu'un échantillonneur-bloqueur (14) est interposé entre chacune d'elles et le filtre passe bas correspondant, ces lignes à retard et ces échantillonneurs-bloqueurs étant pilotés par un signal à une fréquence de synchronisation réglable, et en ce que les moyens d'analyse spectrale comportent des convertisseurs analogiques-numériques pour permettre une analyse numérisée des signaux reçus après leur sortie des soustracteurs.

3. Dispositif selon l'une quelconque des revendications 1 ou 2, caractérisé en ce que les moyens d'élimination sont pilotés par un signal ($f_s$) de synchronisation à une fréquence multiple (43) de la fréquence de répétition.

4. Dispositif selon la revendication 3, caractérisé en ce qu'il comporte un circuit de validation (44 -46) du signal de synchronisation pour éliminer, dans le signal reçu et à chaque période de répétition, des parties de signal correspondant à une réception immédiate après la fin d'une impulsion acoustique.

5. Dispositif selon l'une quelconque des revendications I à 4 caractérisé en ce que les moyens d'élimination sont suivis par des moyens d'intégration (24) pour améliorer le rapport signal à bruit des signaux reçus.

6. Dispositif selon la revendication 5 et la revendication 3 caractérisé en ce que les moyens d'intégration sont piotés par un signal ($F_i$) à une fréquence sous multiple entier (n) de la fréquence du signal de synchronisation.

7. Dispositif selon la revendication 1 ou la revendication 2 caractérisé en ce que les moyens d'analyse spectrale sont pilotés par le signal de synchronisation.

8. Dispositif selon la revendication 5 caractérisé en ce que les moyens d'analyse spectrale sont piloté par le signal de pilotage ($F_i$) des moyens d'intégration.

# FIG_1

0 197 854

# FIG_2

# FIG_3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | EP-A-0 092 841 (ALOKA)<br>* Résumé; page 1, lignes 1-7; page 2, ligne 12 - page 10, ligne 10; page 18, revendications 1-3 * | 1-3 | G 01 S    7/52<br>G 01 S   15/52<br>G 01 S   15/89<br>G 01 P    5/00 |
| | --- | | |
| Y | THE MARCONI REVIEW, vol. 39, no. 203, 1976, pages 201-223, Great Baddow, GB; B. WARDROP et al.: "The application of charge-coupled devices to moving-target-indicator filters"<br>* En entier * | 1-3 | |
| | --- | | |
| A | ISA TRANSACTIONS, vol. 15, no. 2, 1976, pages 169-174, Pittsburgh, US; B.K. GILBERT et al.: "A charge coupled transversal filter for biomedical signal conditioning"<br>* En entier * | 1,2 | **DOMAINES TECHNIQUES RECHERCHES (Int. Cl.4)** |
| | --- | | |
| A | US-A-4 324 258 (HUEBSCHER et al.)<br>* Résumé; colonne 6, ligne 25 - colonne 10, ligne 49 * | 1,2 | G 01 S<br>G 01 P<br>G 01 F<br>H 03 H |
| | --- | | |
| A | FR-A-2 375 764 (HOFFMANN-LA ROCHE)<br>* Page 8, ligne 24 - page 15, ligne 2 * | 1,2 | |
| | ---         -/- | | |

Le présent rapport de recherche a été établi pour toutes les revendications

| Lieu de la recherche | Date d'achèvement de la recherche | Examinateur |
|---|---|---|
| LA HAYE | 26-06-1986 | OLDROYD D.L. |

## DOCUMENTS CONSIDERES COMME PERTINENTS

Page 2

| Catégorie | Citation du document avec indication, en cas de besoin, des parties pertinentes | Revendication concernée | CLASSEMENT DE LA DEMANDE (Int. Cl.4) |
|---|---|---|---|
| A | EP-A-0 135 170 (TOSHIBA) <br> * Page 3, lignes 10-15; page 5, lignes 17-21; page 10, ligne 32 - page 11, ligne 25 * | 1,2 | |
| A | EP-A-0 081 045 (TOSHIBA DENKI) <br> * Page 6, ligne 16 - page 17, ligne 9 * | 1,2 | |
| A | FR-A-2 323 366 (INSERM) <br> * Page 6, ligne 20 - page 8, ligne 38 * | 1,2 | |
| A | CIRCUIT THEORY AND DESIGN, Proceedings of the 1978 European Conference on Circuit Theory and Design, éd. G.S. Moschytz et al. pages 528-532, Georgi Publishing Company, St. Saphorin (CH); R. FEHR: "A new MTI structure with inherent analog to digital conversion" | | |
| A | BIOMEDIZINISCHE TECHNIK, vol. 21, (Supplément), juin 1976, pages 289-290, Berlin, DE; R. FEHR et al.: "Pulsed ultrasonic Doppler velocimeter for measuring velocity profiles by analog signal processing methods" | | |
| | ---      -/- | | |

DOMAINES TECHNIQUES
RECHERCHES (Int. Cl.4)

Le présent rapport de recherche a été établi pour toutes les revendications

| Lieu de la recherche | Date d'achèvement de la recherche | Examinateur |
|---|---|---|
| LA HAYE | 26-06-1986 | OLDROYD D.L. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82

| | **DOCUMENTS CONSIDERES COMME PERTINENTS** | | Page   3 |
|---|---|---|---|
| Catégorie | Citation du document avec indication, en cas de besoin, des parties pertinentes | Revendication concernée | CLASSEMENT DE LA DEMANDE (Int. Cl.4) |
| A | IEEE TRANSACTIONS ON SONICS AND ULTRASONICS, vol. SU-24, no. 6, novembre 1977, pages 350-354, New York, US; R.W. BARNES et al.: "An ultrasound digital moving target indicator system for diagnostic use"<br><br>--- | | |
| A | IEEE TRANSACTIONS ON BIO-MEDICAL ENGINEERING, vol. BME-18, no. 1, janvier 1971, pages 4-8, New York, US; R.W. BARNES et al.: "An ultrasound moving target indicator system for diagnostic use"<br><br>----- | | |
| | | | **DOMAINES TECHNIQUES RECHERCHES (Int. Cl.4)** |

Le présent rapport de recherche a été établi pour toutes les revendications

| Lieu de la recherche | Date d'achèvement de la recherche | Examinateur |
|---|---|---|
| LA HAYE | 26-06-1986 | OLDROYD D.L. |